# EUROPÄISCHE PATENTSCHRIFT

(11) **EP 4 367 780 B1**
(45) Veröffentlichungstag und Bekanntmachung des Hinweises auf die Patenterteilung: **12.08.2026**
(21) Anmeldenummer: 22734103.9
(22) Anmeldetag: 08.06.2022
(51) Int. Cl.: H02K 5/10, B60K 6/20, B60K 6/405, H02K 5/15, H02K 7/00, H02K 7/18

(54) **ELEKTRISCHE MASCHINE ZUR ERZEUGUNG ELEKTRISCHER ENERGIE UND HYBRIDE ANTRIEBSEINHEIT FÜR EIN FAHRZEUG**
ELECTRIC MACHINE FOR GENERATING ELECTRIC ENERGY, AND HYBRID DRIVE UNIT FOR A VEHICLE
MACHINE ÉLECTRIQUE DESTINÉE À GÉNÉRER DE L'ÉNERGIE ÉLECTRIQUE, ET UNITÉ D'ENTRAÎNEMENT HYBRIDE POUR UN VÉHICULE

(30) Priorität: 07.07.2021 DE 102021117486; 26.07.2021 DE 102021119221
(43) Veröffentlichungstag der Anmeldung: 15.05.2024
(73) Patentinhaber: Schaeffler Technologies AG & Co. KG, 91074 Herzogenaurach (DE)
(72) Erfinder: LEHMANN, Steffen, 76275 Ettlingen (DE)
(74) Vertreter: Schaeffler Technologies
(86) Internationale Anmeldenummer: PCT/DE2022/100429
(87) Internationale Veröffentlichungsnummer: WO 2023/280338

(56) Entgegenhaltungen:
- EP-A1- 1 736 345
- CN-U- 203 734 426
- DE-A1- 102012 219 728
- DE-A1- 102016 211 945
- DE-A1- 102018 200 567
- DE-A1- 4 201 373
- US-A1- 2011 088 958

## Beschreibung

Die Erfindung betrifft eine elektrische Maschine zur Erzeugung elektrischer Energie für ein hybrides Fahrzeug, eine hybride Antriebseinheit für ein Fahrzeug sowie ein Verfahren zum Verbinden einer Verbrennungskraftmaschine mit einer elektrischen Maschine.

Anders ausgedrückt betrifft die vorliegende Erfindung eine Vorrichtung (elektrische Maschine) und ein Verfahren und insbesondere ein Getriebe bzw. eine hybride Antriebseinheit, wie zum Beispiel ein dediziertes Hybridgetriebe bzw. Dedicated Hybrid Transmission bzw. DHT, mit einer oder zwei elektrischen Maschinen zur Verwendung in einem Kraftfahrzeug.

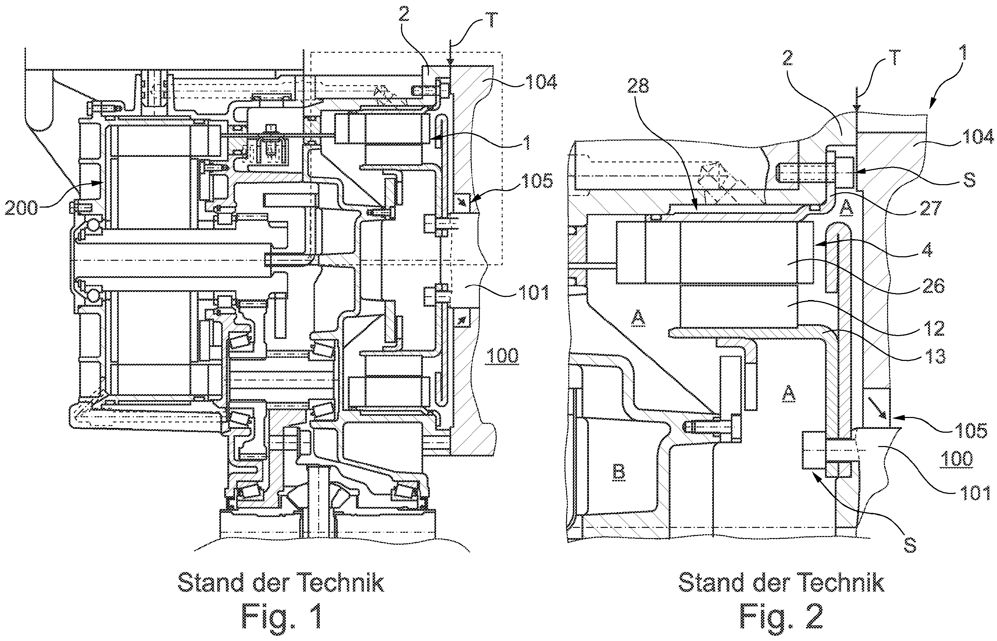

Aus der nicht vorveröffentlichten deutschen Patentanmeldung mit dem amtlichen Aktenzeichen 10 2020 123 116.4 ist ein Getriebe mit zwei elektrischen Maschinen bekannt, wie es in den Fig. 1 und Fig. 2 gezeigt ist.

Wie es in Fig. 1 gezeigt ist, ist eine erste elektrische Maschine 1 als ein Generator direkt mit einer Kurbelwelle 101 eines Verbrennungsmotors 100 bzw. einer Verbrennungskraftmaschine 100 (lediglich mit Bezugszeichen angedeutet) verbunden.

In diesem Fall dient eine zweite E-Maschine bzw. eine zweite elektrische Maschine 200 als eine Traktions- bzw. Fahrmaschine.

Ein Motorgehäuse 104 bzw. eine Gehäuse 104 der Verbrennungskraftmaschine 100 und ein Getriebegehäuse 2 bzw. ein Gehäuse 2 der elektrischen Maschine 1 sind miteinander verschraubt und bilden eine Trennebene T.

Der Verbrennungsmotor 100 bzw. die Verbrennungskraftmaschine 100 ist über eine Kurbelwellendichtung 105 bzw. eine Radialwellendichtung 105 abgedichtet.

Fig. 2 zeigt einen vergrößerten Ausschnitt von Fig. 1.

Ein Stator 26 der ersten elektrischen Maschine 1 ist mittels eines Statorträgers 27 über z. B. Schrauben S mit dem Getriebegehäuse 2 bzw. dem Gehäuse 2 der elektrischen Maschine 1 verbunden.

Ein Kühlmittel- bzw. Kühlwasserkanal 28 bzw. ein Kühlkanal 28 ist durch das Getriebegehäuse bzw. durch das Gehäuse 2 der elektrischen Maschine 1 und den Statorträger 27 begrenzt.

Ein Rotor 12 der ersten elektrischen Maschine 1 ist durch einen Rotorträger 13 und Schrauben S mit der Kurbelwelle 101 verbunden.

Ein Raum A bzw. ein erster Raumabschnitt A, in dem sich die erste elektrische Maschine 1 befindet, ist trocken und durch das Getriebegehäuse 2 bzw. durch das Gehäuse 2 von einem Nass- bzw. Ölraum B des Getriebes oder von einem zweiten Raumabschnitt B getrennt.

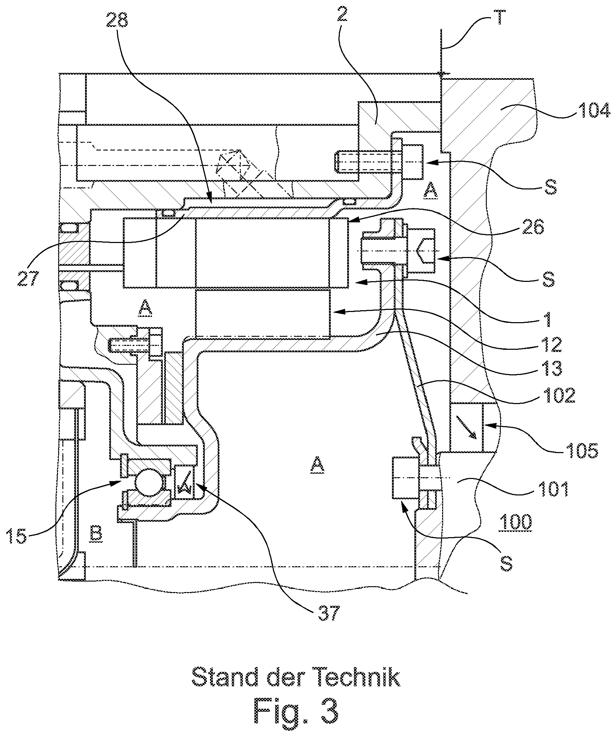

Aus der nicht vorveröffentlichten deutschen Patentanmeldung mit dem amtlichen Aktenzeichen 10 2021 108 127.0 ist ein Getriebe mit zwei elektrischen Maschinen bekannt, wie es in Fig. 3 gezeigt ist.

Wie es in Fig. 3 gezeigt ist, ist ein Rotor 12 einer ersten elektrischen Maschine 1 auf einer Seite über einen Rotorträger 13, Schrauben S, eine sogenannte Flexplate 102 bzw. ein flexibles Scheibenteil 102 und Schrauben S mit einer Kurbelwelle 101 einer Verbrennungskraftmaschine 100 (lediglich mit Bezugszeichen angedeutet) verbunden.

Auf einer der Verbindung des Rotors 12 mit der Kurbelwelle 101 axial gegenüberliegenden anderen Seite ist der Rotorträger 13 durch ein Wälzlager 15 bzw. durch ein Lager 15 gelagert.

Der Raum A bzw. der erste Raumabschnitt A der ersten elektrischen Maschine 1 ist trocken und durch das Getriebegehäuse 104 bzw. durch das Gehäuse 104 der Verbrennungskraftmaschine 100 und einen Radialwellendichtring 37 von einem Nass- bzw. Ölraum B des Getriebes bzw. von einem zweiten Raumabschnitt B getrennt.

Es hat sich herausgestellt, dass in dem zuvor angegebenen Stand der Technik der Raum bzw. der Raumabschnitt A zwischen dem Verbrennungsmotor 100 bzw. der Verbrennungskraftmaschine 100 und dem Getriebe bzw. dem Gehäuse 2 der elektrischen Maschine 1 schwierig abdichtbar ist und eine wasserfeste Isolation des Stators 26 der ersten elektrischen Maschine 1 schwierig und aufwändig ist.

Genauer gesagt ist es in vielen Fällen sehr schwer, die Trennebene T des Motorgehäuses 104 bzw. des Gehäuses 104 der Verbrennungskraftmaschine 100 und des Getriebegehäuse 2 bzw. des Gehäuses 2 der elektrischen Maschine 1 derart zu gestalten, dass eine geschlossene Abdichtfläche entsteht.

Es kann daher nicht verhindert werden, dass zum Beispiel bei Wasserdurchfahrten Feuchtigkeit in den Raum A bzw. in den ersten Raumabschnitt A eindringt.

Eine derartige Gestaltung des Stators 26 der ersten elektrischen Maschine 1, dass dieser in allen Fällen gegen Wasser isoliert ist und keine Kurzschlussgefahr entsteht, wäre zwar grundsätzlich möglich, ist jedoch fertigungstechnisch sehr aufwändig.

Ein direktes Anschrauben des Rotors 12 der ersten elektrischen Maschine 1 an die Kurbelwelle 101 würde der Notwendigkeit eines kompletten Testens der ersten elektrischen Maschine 1 vor einer Montage des Getriebes bzw. der elektrischen Maschine 1 an den Verbrennungsmotor 100 bzw. an die Verbrennungskraftmaschine 100 beseitigen, da der Rotor 12 Teil der Kurbelwelle 101 ist und erst bei der Montage mit dem Stator 26 kombiniert wird. Allerdings muss dann ein Einrichten der ersten elektrischen Maschine 1, wie zum Beispiel ein Einstellen eines Luftspalts zwischen dem Stator 26 und dem Rotor 12 bei bzw. nach der Montage des Getriebes / des Gehäuses 2 der elektrischen Maschine 1 an den Verbrennungsmotor 100 / an die Verbrennungskraftmaschine 100 durchgeführt werden, was nicht immer erwünscht ist.

Eine Gestaltung eines bekannten Getriebeeingangs mit einer verzahnten Getriebeeingangswelle und der ersten elektrischen Maschine 1 in einem Ölraum würde bei einem seriellen Antrieb aufgrund eines Verzahnungsspiels einer Steckverzahnung einen vorgeschalteten Torsionsdämpfer erfordern und wäre ebenso kosten- und bauraumaufwändig.

Ferner ist aus der DE 10 2016 211 945 A1 eine elektrische Maschine bekannt, die auf den Oberbegriff des Anspruchs 1 lesbar ist.

Es ist demgemäß die Aufgabe der vorliegenden Erfindung, die zuvor genannten Probleme im Stand der Technik zu beseitigen und eine verbesserte elektrische Maschine zur Verwendung in einem Kraftfahrzeug zu schaffen.

Die Aufgabe wird erfindungsgemäß durch eine elektrische Maschine gemäß Anspruch 1 gelöst.

Weitere vorteilhafte Ausgestaltungen der vorliegenden Erfindung sind Gegenstand der abhängigen Ansprüche.

Bei einem ersten Aspekt weist eine elektrische Maschine zur Erzeugung elektrischer Energie für ein hybrides Fahrzeug ein Gehäuse mit einer axialen Öffnung zum Einbau einer Stator- und einer Rotoreinrichtung und mit wenigstens einem äußeren Gehäusewandteil auf, das die elektrische Maschine zur Umgebung abgrenzt. Dabei kann das Gehäuse eine Form ähnlich einem Topf aufweisen, dessen offene Seite die axiale Öffnung bildet bzw. dessen offene Seite in axialer Richtung für den Einbau beispielsweise der Stator- und/oder einer Rotoreinrichtung zugänglich ist.

Ferner umfasst die elektrische Maschine eine Statoreinrichtung, die im Innerem des Gehäuses angeordnet ist.

Zudem umfasst die elektrische Maschine eine Rotoreinrichtung zur Verbindung mit einer Verbrennungskraftmaschine, sodass Drehenergie der Verbrennungskraftmaschine in elektrische Energie durch relative Drehung der Rotoreinrichtung zur Statoreinrichtung umwandelbar ist.

Des Weiteren weist die elektrische Maschine eine Dichteinrichtung auf, die die axiale Öffnung des Gehäuses verschließt und das Innere des Gehäuses in axialer Richtung in zwei Raumabschnitte unterteilt, sodass in einem ersten Raumabschnitt eine Kurbelwelle einer Verbrennungskraftmaschine an die Rotoreinrichtung anschließbar ist und in einem zweiten Raumabschnitt die Statoreinrichtung angeordnet ist. Eben das Verschließen der axialen Öffnung des Gehäuses erlaubt zum einen ein Eindringen von Wasser in den ersten Raumabschnitt zwischen einer Verbrennungskraftmaschine und der elektrischen Maschine bzw. deren Gehäuse, ohne dass die Statoreinrichtung bzw. deren Stator beschädigt werden kann. Denn die Dichteinrichtung schützt den Stator bzw. die Statoreinrichtung vor Wasser und Schmutz. Zum anderen ist aufgrund der Dichteinrichtung ein Dichten der Statoreinrichtung der elektrischen Maschine mit einfachem Aufwand möglich. Ferner kann mithilfe der Dichtvorrichtung die elektrische Maschine vor dem Zusammenbau mit einer Verbrennungskraftmaschine im Werk geprüft werden. Demzufolge kann also eine elektrische Maschine mit Gehäuse geschaffen werden, die vor der Montage mit einer Verbrennungskraftmaschine getestet werden kann und die gegen den Eintritt von Wasser und/oder Schmutz geschützt ist, obwohl die elektrische Maschine noch nicht mit einer Verbrennungskraftmaschine bzw. deren Gehäuse zusammengebaut ist.

Des Weiteren kann die Dichteinrichtung innerhalb des Gehäuses angeordnet sein und sich von dem wenigstens einen äußeren Gehäusewandteil hin zur Rotoreinrichtung, beispielsweise in radialer Richtung, erstrecken. Somit ist zwischen dem Gehäuse und der Rotoreinrichtung ein Eindringen von Wasser und Schmutz verhinderbar, da die Rotoreinrichtung wie das Gehäuse als Bauteil undurchlässig ausgebildet sein kann und somit selbst dichten kann.

Dabei kann die Dichteinrichtung dichtend an dem wenigstens einen äußeren Gehäusewandteil und an der Rotoreinrichtung, beispielsweise an einer Nabeneinheit der Rotoreinrichtung, anliegen.

Die Dichteinrichtung kann so ausgestaltet sein, dass diese zwischen dem wenigstens einen äußeren Gehäusewandteil und der Rotoreinrichtung bzw. einer Nabeneinheit der Rotoreinrichtung einklemmbar oder einspreizbar ist. Auch kann die Dichteinrichtung so ausgestaltet sein, dass diese am Gehäuse oder in oder an das wenigstens eine äußere Gehäusewandteil einspreizbar oder klemmbar oder einpressbar ist. Somit kann auf Befestigungsmittel wie Schrauben oder Nieten verzichtet werden, wodurch Gewicht einsparbar ist und die Montage um anzubringende Schrauben vereinfacht wird. Ferner ist dadurch die Dichteinrichtung rotationsstarr am wenigstens einen äußeren Gehäusewandteil oder an dem Gehäuse angeordnet.

Die Dichteinrichtung kann eine Radialwellendichtung umfassen. Je kleiner deren Durchmesser desto besser ihre Dichtwirkung und desto weniger ihr Einfluss hinsichtlich Reibung.

Die Radialwellendichtung kann auf einer Dichtfläche einer Nabeneinheit der Rotoreinrichtung angeordnet sein. Dieses Zusammenspiel erlaubt ein optimales Abdichten.

Des Weiteren kann die Dichteinrichtung ein geformtes Dichtelement umfassen, dessen Verlauf trichterförmig ausgebildet ist.

Das Dichtelement kann an seinem Ende in radialer Richtung nach außen betrachtet bzw. an seinem radial außenliegenden Ende eine Aufnahme für das Gehäuse bilden.

Ferner kann das Dichtelement am radial außenliegenden Ende einen Durchgang für eine Schraube oder einen Niet aufweisen, sodass eine reib- oder kraftschlüssige Verbindung zwischen dem Dichtelement und dem Gehäuse der elektrischen Maschine, beispielsweise mithilfe von Schrauben, erstellbar ist. Somit kann die Dichtwirkung erhöht und die Position gesichert werden.

Zudem kann das Dichtelement an seinem Ende in radialer Richtung nach innen betrachtet bzw. an seinem radial innenliegenden Ende eine Aufnahme für eine Radialwellendichtung der Dichteinrichtung bilden und so ausgebildet sein, dass die Radialwellendichtung mit einer Vorspannkraft gegen eine Dichtfläche einer Nabeneinheit der Rotoreinrichtung spannbar ist. Die Vorspannkraft stellt ein sicheres Anliegen der Radialwellendichtung an der zugehörigen Dichtfläche sicher, wodurch die Leistung der Dichtung erhöhbar ist.

Auch kann die Rotoreinrichtung einen Rotor und einen Rotorträger aufweisen, die miteinander drehfest verbunden sind.

Der Rotor, in radialer Richtung gesehen, kann außen am Rotorträger angeordnet sein, wobei eine Nabeneinheit oder der Rotorträger, in radialer Richtung gesehen, innen eine Lageraufnahme für ein Lager aufweisen kann, mit welcher Kräfte der Rotoreinrichtung aufnehmbar und zusammen mit einem Lager die Drehung der Rotoreinrichtung gewährleistbar ist.

Ferner kann die Rotoreinrichtung ein Lager aufweisen, das an der Lageraufnahme des Rotorträgers angeordnet ist. Mit diesem können Kräfte der Rotoreinrichtung aufgenommen und die Drehung der Rotoreinrichtung gewährleistet werden.

Die Rotoreinrichtung kann auch ein Verbindungsteil aufweisen, das für die Verbindung mit einer Kurbelwelle einer Verbrennungskraftmaschine ausgebildet ist.

Das Verbindungsteil kann an seiner Außenseite, in radialer Richtung nach außen betrachtet, bzw. an seiner radialen Außenseite wenigstens ein Innengewinde zur Verbindung mit einer Kurbelwelle einer Verbrennungskraftmaschine aufweisen.

Zudem kann das Verbindungsteil an seiner Innenseite, in radialer Richtung nach innen betrachtet, bzw. an seiner radialen Innenseite wenigstens einen Durchgang zur reib- und/oder formschlüssigen Verbindung mit einer Nabeneinheit der Rotoreinrichtung aufweisen.

Das Verbindungsteil kann eine Form aufweisen, die an einen Suppenteller erinnert. Diese Form verleiht eine ausreichende mechanische Stabilität und erleichtert ein Abfließen von Wasser.

Des Weiteren kann die Rotoreinrichtung eine Nabeneinheit aufweisen, an welcher ein Rotorträger der Rotoreinrichtung drehfest befestigt ist, wobei der Rotorträger für die drehfeste Anordnung eines Rotors der Rotoreinrichtung ausgebildet ist.

Auch kann die Rotoreinrichtung eine Nabeneinheit aufweisen, an welcher zusätzlich oder alternativ zum Rotorträger der Rotoreinrichtung ein Verbindungsteil der Rotoreinrichtung drehfest befestigt ist, wobei das Verbindungsteil für die Verbindung mit einer Kurbelwelle ausgebildet ist.

Ferner kann die Nabeneinheit eine Dichtfläche für eine Radialwellendichtung der Dichteinrichtung aufweisen. Somit ist die Dichtleistung der Dichteinrichtung erhöhbar.

Die Dichtfläche kann zwischen einem Rotorträger der Rotoreinrichtung und einem Verbindungsteil der Rotoreinrichtung angeordnet sein. Auf diese Weise ist der Rotorträger in einem zweiten Raumabschnitt und das Verbindungsteil in einem ersten Raumabschnitt anordenbar, wobei die beiden Raumabschnitte mithilfe der Dichteinrichtung gegeneinander gedichtet sind, sodass Wasser und Schmutz nicht von dem einen in den anderen gelangen können.

Zudem kann die Dichtfläche von einem Absatz der Nabeneinheit gebildet werden. Dies gewährleistet, dass die Dichtfläche auf einfache Weise herstellbar ist.

Ferner kann die Nabeneinheit einen Absatz aufweisen, gegen den auf der einen Seite der Rotorträger und auf der anderen Seite das Verbindungsteil anliegt, sodass eine Kurbelwelle einer Verbrennungskraftmaschine über das Verbindungsteil und über die Nabeneinheit mit dem Rotorträger verbindbar ist.

Der Absatz kann in radialer Richtung gesehen nach außen vorspringen. Auf diese Weise kann eine Dichtfläche, die an diesem ausgebildet ist, auf einfache Weise gefertigt werden.

Der Absatz kann mehrere Durchgangsbohrungen, beispielsweise in axialer Richtung, aufweisen, in welchen jeweils ein Niet oder eine Schraube angeordnet ist, die die Nabeneinheit und/oder den Rotorträger und/oder das Verbindungsteil der Rotoreinrichtung drehfest miteinander verbindet.

Zudem kann die Nabeneinheit eine Verzahnung aufweisen, in welche der Rotorträger mit entsprechender Gegenverzahnung eingreift. Dabei können Verzahnung und Gegenverzahnung spielfrei ausgebildet sein.

Auch kann die Nabeneinheit zusammen mit dem Rotorträger eine Welle-Nabe-Verbindung aufweisen, mit deren Hilfe eine drehfeste Verbindung zwischen Nabeneinheit und Rotorträger gewährleistet ist.

Ferner kann der Rotorträger gegen den Absatz mithilfe einer Wellenmutter gespannt sein. Dabei kann der Rotorträger über ein Lager und eine Hülse gegen den Absatz mithilfe einer Wellenmutter gespannt werden.

Somit kann eine für den Betrieb verbesserte Lagervorspannung erreicht werden.

Des Weiteren kann ein Lager der Rotoreinrichtung mithilfe eines Sicherungsrings am Rotorträger gesichert sein.

Zudem kann das wenigstens eine äußere Gehäusewandteil zur Anordnung der Statoreinrichtung ausgebildet sein.

Die Statoreinrichtung kann einen Stator und einen Statorträger umfassen, an welchem radial innenseitig der Stator befestigt ist und welcher radial außenseitig an dem wenigstens einen Gehäusewandteil angeordnet ist.

Zwischen dem Statorträger und dem wenigstens einen Gehäusewandteil kann ein Kühlkanal ausgebildet sein, um Betriebswärme des Stators abzuführen.

Der Statorträger kann dabei ähnlich einem Hohlzylinder ausgebildet sein.

Auch kann der Statorträger wenigstens einen Absatz aufweisen, mit welchem dieser gegen einen Absatz des wenigstens einen äußeren Gehäusewandteils anliegt.

Der Statorträger kann zudem radial außenseitig eine oder mehrere Nuten zur Anbringung von Dichtelementen aufweisen, sodass ein Kühlkanal in axialer Richtung abdichtbar ist.

Ferner kann der Statorträger Dichtelemente umfassen, die in dessen Nuten angeordnet sind.

Auch kann der Statorträger wenigstens einen Durchgang, beispielsweise in axialer Richtung, aufweisen, der in radialer Richtung gesehen außen angeordnet ist, um den Statorträger mit dem wenigstens einen äußeren Gehäusewandteil zu verschrauben.

Der wenigstens eine Durchgang kann an einem Absatz ausgebildet sein, mit welchem der Statorträger gegen einen Absatz des wenigstens einen äußeren Gehäusewandteils anliegt.

Das wenigstens eine äußere Gehäusewandteil kann wenigstens ein Innengewinde umfassen, in welches jeweils eine Schraube geschraubt ist, um den Statorträger am Gehäuse zu befestigen.

Ferner kann der Statorträger an einem axialen Ende bzw. an einem Ende, betrachtet in axialer Richtung, eine Fase aufweisen, an welcher eine Dichtung zwischen dem Statorträger und der Dichteinrichtung bzw. deren Dichtelement angeordnet ist. Somit kann die Dichtleistung erhöht werden.

Abschließend sei noch erwähnt, dass die elektrische Maschine zur Erzeugung von elektrischer Energie ausgebildet ist, um z. B. eine Batterie zu laden und/oder einen elektrischen Motor mit Energie zu versorgen.

Ferner wird darauf hingewiesen, dass die Achse eines Durchgangs oder einer Durchgangsbohrung in axialer Richtung verlaufen kann.

Ein zweiter Aspekt der vorliegenden Erfindung umfasst eine hybride Antriebseinheit für ein Fahrzeug.

Es wird ausdrücklich darauf hingewiesen, dass die Merkmale der elektrischen Maschine, wie sie unter dem ersten Aspekt erwähnt werden, einzeln oder miteinander kombinierbar bei der hybriden Antriebseinheit für ein Fahrzeug Anwendung finden können.

Anders ausgedrückt, die oben unter dem ersten Aspekt der Erfindung genannten Merkmale betreffend die elektrische Maschine können auch hier unter dem zweiten Aspekt der Erfindung mit weiteren Merkmalen kombiniert werden.

Eine hybride Antriebseinheit für ein Fahrzeug umfasst eine elektrische Maschine nach dem ersten Aspekt sowie eine Verbrennungskraftmaschine mit einer Kurbelwelle und einem flexiblen Scheibenteil. Selbstverständlich kann der hybride Antrieb auch eine erste und eine zweite elektrische Maschine aufweisen, wobei die erste Maschine als Generator dient und die zweite elektrische Maschine als Antrieb für ein Fahrzeug. Dabei kann der hybride Antrieb als so genannter serieller Antrieb, bei dem eine elektrische Maschine als Generator und die andere als Antrieb eines Fahrzeuges arbeitet, ausgebildet sein.

Das flexible Scheibenteil ist drehfest an der Kurbelwelle und drehfest an dem Verbindungsteil der Rotoreinrichtung der elektrischen Maschine angeordnet, sodass die Drehenergie der Verbrennungskraftmaschine über die Kurbelwelle, das flexible Scheibenteil und das Verbindungsteil hin zum Nabenteil und über den Rotorträger hin zum Rotor übertragbar ist, um mechanische in elektrische Energie zu wandeln.

Dabei kann das flexible Scheibenteil mittels Schrauben an der Kurbelwelle befestigt sein.

Ferner kann das flexible Scheibenteil an seiner Außenseite, in radialer Richtung nach außen betrachtet, bzw. an seiner radialen Außenseite wenigstens einen Durchgang aufweisen, durch welchen eine Schraube hindurchführbar ist, um das flexible Scheibenteil mit dem Verbindungsteil der Rotoreinrichtung der elektrischen Maschine zu verbinden.

Des Weiteren kann die Verbrennungskraftmaschine ein Gehäuse und eine Radialwellendichtung umfassen, die das Innere des Gehäuses gegen das Äußere abdichtet.

Abschließend wird darauf hingewiesen, dass die Achse eines Durchgangs oder einer Durchgangsbohrung in axialer Richtung verlaufen kann.

Ein dritter Aspekt der vorliegenden Erfindung umfasst ein Verfahren zum Verbinden einer Verbrennungskraftmaschine mit einer elektrischen Maschine.

Es wird ausdrücklich darauf hingewiesen, dass die Merkmale der hybriden Antriebseinheit für ein Fahrzeug, wie sie unter dem zweiten Aspekt erwähnt werden, einzeln oder miteinander kombinierbar bei dem Verfahren zum Verbinden einer Verbrennungskraftmaschine mit einer elektrischen Maschine Anwendung finden können.

Anders ausgedrückt, die oben unter dem zweiten Aspekt der Erfindung genannten Merkmale betreffend die hybride Antriebseinheit für ein Fahrzeug können auch hier unter dem dritten Aspekt der Erfindung mit weiteren Merkmalen kombiniert werden.

Das Verfahren zum Verbinden einer Verbrennungskraftmaschine mit einer elektrischen Maschine schafft eine hybride Antriebseinheit, wie sie im zweiten Aspekt beschrieben wird.

Das Verfahren kann die nachstehenden Schritte umfassen.

Ein Schritt umfasst ein Ausrichten in axialer Richtung bzw. ein axiales Ausrichten einer Kurbelwelle einer Verbrennungskraftmaschine und einer elektrischen Maschine an einer gemeinsamen Drehachse zur Schaffung einer hybriden Antriebseinheit, wie unter dem zweiten Aspekt geschildert.

Daraufhin können die Gehäuse der elektrischen Maschine und der Verbrennungskraftmaschine miteinander verbunden werden.

Danach kann sich der Schritt des Verbindens des Verbindungsteils der Rotoreinrichtung der elektrischen Maschine mittels Schrauben an dem flexiblen Scheibenteil der Verbrennungskraftmaschine anschließen.

Ein weiterer Schritt kann vor dem Verbinden des Verbindungsteils mit dem flexiblen Scheibenteil ein Ausrichten von einem Durchgang des flexiblen Scheibenteils mit einem Innengewinde des Verbindungsteils umfassen, sodass mittels einer Schraube, die durch eine Öffnung in axialer Richtung bzw. durch eine axiale Öffnung des Gehäuses der Verbrennungskraftmaschine hindurchführbar ist, das Verbindungsteil und das flexible Scheibenteil verschraubbar sind. Ein derartiger Schritt findet sich beispielsweise bei einem Zusammenbau bzw. beim Verbinden von Wandler-Automaten aus dem Stand der Technik.

Nachfolgend wird der oben dargestellte Erfindungsgedanke ergänzend mit anderen Worten ausgedrückt.

So ist ein Dichtblech bzw. eine Dichteinrichtung zwischen einem Rotor einer ersten elektrischen Maschine und einem Verbrennungsmotor bzw. einer Verbrennungskraftmaschine vorgesehen.

Es kann eine drehfeste spielfreie Verbindung des Rotors der ersten elektrischen Maschine mit einer Kurbelwelle der Verbrennungskraftmaschine vorgesehen sein.

Ein Mitnahmeblech/Schwungrad bzw. ein Verbindungsteil kann mit einer axial flexiblen Scheibe bzw. Flexplate bzw. flexiblen Scheibenteil mit der Kurbelwelle verbunden sein.

Ein Mitnahmeblech/Schwungrad bzw. ein Verbindungsteil kann über eine radial kleine Nabe / Nabeneinheit mit dem Rotor der ersten elektrischen Maschine verbunden sein.

Ein Radialwellendichtring bzw. eine Dichtung kann auf einem möglichst kleinen Durchmesser zu einer Nabe / Nabeneinheit abdichtend sein.

Ein nicht komplett abdichtbarer Raum / erster Raumabschnitt zwischen Verbrennungsmotor bzw. Verbrennungskraftmaschine und Getriebe bzw. elektrischer Maschine kann von einem abgedichteten Raum bzw. Ölraum bzw. zweiten Raumabschnitt getrennt sein.

Aufgrund obiger Ausgestaltungsmöglichkeiten ergeben sich diverse vorteilhafte Wirkungen der Erfindung.

Durch die zuvor angegebene Lösung können die folgenden Vorteile erzielt werden:
- direkte spielfreie drehfeste Verbindung eines Rotors einer ersten elektrischen Maschine mit einer Kurbelwelle
- kein Zwischenschalten eines Torsionsdämpfers
- keine speziellen Isolationsaufwände für einen Stator der ersten elektrischen Maschine
- Zulassen eines Eindringens von Wasser und/oder anderen Fremdstoffen/Verunreinigungen in einen Raum zwischen einem Verbrennungsmotor und einem Getriebe, ohne die erste elektrische Maschine zu kontaminieren oder zu beschädigen
- finales Prüfen und ggf. Einrichten des Getriebes bzw. einer elektrischen Maschine inklusive der Funktion der ersten elektrischen Maschine bei bzw. nach Zusammenbau des Getriebes

Nachstehend wird die Erfindung anhand von zwei Ausführungsbeispielen in Verbindung mit zugehörigen Zeichnungen näher erläutert. Hierbei zeigen schematisch:
- **Fig. 1 und 2**: eine Schnittansicht auf ein Getriebe mit zwei elektrischen Maschinen aus dem Stand der Technik, wobei Figur 2 eine vergrößerte Darstellung eines Abschnitts von Figur 1 zeigt;
- **Fig. 3**: eine Schnittansicht auf ein weiteres Getriebe mit zwei elektrischen Maschinen aus dem Stand der Technik;
- **Fig. 4**: eine Schnittansicht auf eine elektrische Maschine zur Erzeugung elektrischer Energie für ein hybrides Fahrzeug nach einem ersten Ausführungsbeispiel; und
- **Fig. 5**: eine Schnittansicht auf eine elektrische Maschine zur Erzeugung elektrischer Energie für ein hybrides Fahrzeug nach einem zweiten Ausführungsbeispiel.

In der nachfolgenden Beschreibung werden gleiche Bezugszeichen für gleiche Gegenstände verwendet.

Figuren 1 bis 3 zeigen Schnittansichten auf Ausführungen aus dem Stand der Technik, die bereits eingangs dieser Beschreibung diskutiert wurden, sodass an dieser Stelle von weiteren Erläuterungen abgesehen wird.

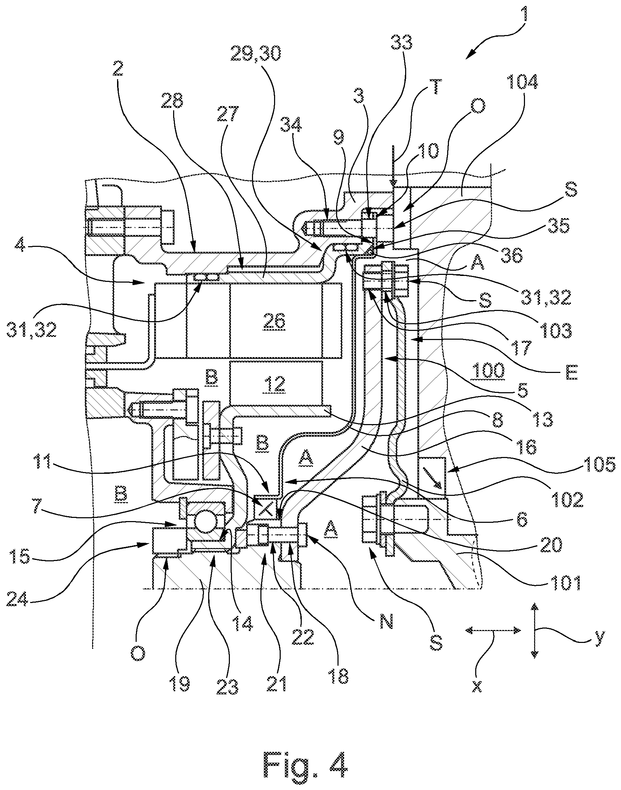

Figur 4 zeigt eine Schnittansicht auf eine elektrische Maschine 1 zur Erzeugung elektrischer Energie für ein hybrides Fahrzeug nach einem ersten Ausführungsbeispiel.

Die elektrische Maschine 1 hat gemäß Figur 4 ein Gehäuse 2 mit einer Öffnung E in axialer Richtung X bzw. mit einer axialen Öffnung E zum Einbau einer Stator- 4 und einer Rotoreinrichtung 5 und mit einem äußeren Gehäusewandteil 3, das die elektrische Maschine 1 zur Umgebung abgrenzt.

Des Weiteren hat die elektrische Maschine 1 eine Statoreinrichtung 4, die im Innerem des Gehäuses 2 angeordnet ist, und eine Rotoreinrichtung 5 zur Verbindung mit einer Verbrennungskraftmaschine 100 (lediglich mit Bezugszeichen angedeutet). Somit kann Drehenergie der Verbrennungskraftmaschine 100 in elektrische Energie durch relative Drehung der Rotoreinrichtung 5 zur Statoreinrichtung 4 umgewandelt werden.

Wie Figur 4 ferner zu entnehmen, weist die elektrische Maschine 1 eine Dichteinrichtung 6 auf, die die axiale Öffnung E des Gehäuses 2 verschließt und das Innere des Gehäuses 2 in axialer Richtung X in zwei Raumabschnitte A, B unterteilt, sodass in einem ersten Raumabschnitt A eine Kurbelwelle 101 einer Verbrennungskraftmaschine 100 an die Rotoreinrichtung 5 anschließbar ist und in einem zweiten Raumabschnitt B die Statoreinrichtung 4 angeordnet ist.

Das Verschließen der axialen Öffnung E des Gehäuses 2 gestattet ein Eindringen von Wasser, beispielsweise durch eine Öffnung O, in den ersten Raumabschnitt A zwischen einer Verbrennungskraftmaschine 100 und der elektrischen Maschine 1 bzw. deren Gehäuse 2. Denn die Dichteinrichtung 6 schützt einen Stator 26 der Statoreinrichtung 4 vor Wasser und Schmutz. Zudem ist aufgrund der Dichteinrichtung 6 ein Dichten der Statoreinrichtung 4 der elektrischen Maschine 1 mit einfachem Aufwand möglich. Auch kann mithilfe der Dichtvorrichtung 6 die elektrische Maschine 1 vor dem Zusammenbau mit einer Verbrennungskraftmaschine 100 im Werk geprüft werden. Demzufolge kann also eine vollständig gedichtete und vorgeprüfte elektrische Maschine 1 geschaffen werden, die vor der Montage mit einer Verbrennungskraftmaschine getestet werden kann und gegen den Eintritt von Wasser und/oder Schmutz geschützt ist, obwohl die elektrische Maschine 1 noch nicht mit einer Verbrennungskraftmaschine 100 bzw. deren Gehäuse 104 zusammengebaut ist. Demzufolge ist ein Dichten an der Trennebene T nicht notwendig.

Wie in Figur 4 gezeigt, ist die Dichteinrichtung 6 innerhalb des Gehäuses 2 angeordnet und erstreckt sich von dem äußeren Gehäusewandteil 3, z. B. in radialer Richtung Y nach innen, hin zur Rotoreinrichtung 5 bzw. hin zu deren Narbeneinheit 19.

Dabei liegt die Dichteinrichtung 6 dichtend an dem äußeren Gehäusewandteil 3 und an der Rotoreinrichtung 5, insbesondere an einer Nabeneinheit 19 der Rotoreinrichtung 5, an.

Des Weiteren zeigt Figur 4, dass die Dichteinrichtung 6 eine Radialwellendichtung 7 hat, die auf einer Dichtfläche 20 einer Nabeneinheit 19 der Rotoreinrichtung 5 angeordnet ist.

Dabei hat die Dichteinrichtung 6 ein geformtes Dichtelement 8, dessen Verlauf trichterförmig ausgebildet ist. Das Dichtelement 8 bildet an seinem Ende in radialer Richtung Y nach außen betrachtet bzw. an seinem radial außenliegenden Ende eine Aufnahme 9 für das Gehäuse 2, wobei das Dichtelement 8 am radial außenliegenden Ende einen Durchgang 10 für eine Schraube S oder einen Niet aufweist, sodass eine reib- oder kraftschlüssige Verbindung zwischen dem Dichtelement 8 und dem Gehäuse 2 erstellbar ist. Auf diese Weise ist die Dichteinrichtung 6 bzw. das geformte Dichtelement 8 rotationsstarr am Gehäuse 2 angeordnet.

Ferner bildet das Dichtelement 8 an seinem Ende in radialer Richtung nach innen betrachtet bzw. an seinem radial innenliegenden Ende eine Aufnahme 11 für die Radialwellendichtung 7 der Dichteinrichtung 6 und ist so ausgebildet, dass die Radialwellendichtung 7 mit einer Vorspannkraft gegen eine Dichtfläche 20 einer Nabeneinheit 19 der Rotoreinrichtung 5 gespannt ist.

Ferner ist Figur 4 zu entnehmen, dass die Rotoreinrichtung 5 einen Rotor 12 und einen Rotorträger 13 hat, die miteinander drehfest verbunden sind.

Der Rotor 12 ist, in radialer Richtung Y gesehen, außen am Rotorträger 13 angeordnet, und der Rotorträger 13 hat, in radialer Richtung Y gesehen, innen eine Lageraufnahme 14 für ein Lager 15. Die Lageraufnahme 14 kann dabei Kräfte der Rotoreinrichtung 5 aufnehmen und zusammen mit einem Lager 15 die Drehung der Rotoreinrichtung 5 gewährleisten. Zudem hat die Rotoreinrichtung 5 - wie erwähnt - ein Lager 15, das an der Lageraufnahme 14 des Rotorträgers 13 angeordnet ist.

Auch hat die Rotoreinrichtung 5 ein Verbindungsteil 16, das für die Verbindung mit einer Kurbelwelle 101 einer Verbrennungskraftmaschine 100 ausgebildet ist.

Das Verbindungsteil 16 weist an seiner Außenseite, in radialer Richtung Y nach außen betrachtet, bzw. an seiner radialen Außenseite mehrere Innengewinde 17 zur Verbindung mit einer Kurbelwelle 101 einer Verbrennungskraftmaschine 100 auf.

Ferner hat das Verbindungsteil 16 an seiner Innenseite, in radialer Richtung Y nach innen betrachtet, bzw. an seiner radialen Innenseite mehrere Durchgänge 18 zur reib-und/oder formschlüssigen Verbindung mit einer Nabeneinheit 19 der Rotoreinrichtung 5. Dabei hat das Verbindungsteil 16 eine Form, die an einen Suppenteller erinnert.

Des Weiteren zeigt Figur 4, dass die Rotoreinrichtung 5 eine Nabeneinheit 19 umfasst, an welcher der Rotorträger 13 der Rotoreinrichtung 5 drehfest befestigt ist, der für die drehfeste Anordnung eines Rotors 12 der Rotoreinrichtung 5 ausgebildet ist.

Zudem ist an der Nabeneinheit 19 das Verbindungsteil 16 der Rotoreinrichtung 5 drehfest befestigt, das für die Verbindung mit einer Kurbelwelle 101 ausgebildet ist.

Die Nabeneinheit 19 hat eine Dichtfläche 20 für die Radialwellendichtung 7 der Dichteinrichtung 6, wobei die Dichtfläche 20 zwischen dem Rotorträger 13 und dem Verbindungsteil 16 angeordnet ist.

Die Dichtfläche 20 wird dabei von einem Absatz 21 der Nabeneinheit 19 gebildet, gegen den auf der einen Seite der Rotorträger 13 und auf der anderen Seite das Verbindungsteil 16 anliegt. Somit ist eine Kurbelwelle 101 einer Verbrennungskraftmaschine 100 über das Verbindungsteil 16 und über die Nabeneinheit 19 mit dem Rotorträger 13 verbindbar.

Der Absatz 21 der Nabeneinheit 19 hat gemäß Figur 4 mehrere Durchgangsbohrungen 22, in welchen jeweils ein Niet N angeordnet ist, der die Nabeneinheit 19 und das Verbindungsteil 16 der Rotoreinrichtung 5 drehfest miteinander verbindet. Hierbei springt der Absatz 21 in radialer Richtung Y gesehen nach außen vor. Auf diese Weise kann eine Dichtfläche 20, die an diesem ausgebildet ist, auf einfache Weise gefertigt werden.

Wie in Figur 4 ferner dargestellt, hat die Nabeneinheit 19 auch eine Verzahnung 23, in welche der Rotorträger 13 mit entsprechender Gegenverzahnung 23 eingreift. Verzahnung 23 und Gegenverzahnung 23 sind spielfrei ausgebildet.

Genauer gesagt, weist die Nabeneinheit 19 zusammen mit dem Rotorträger 13 eine Welle-Nabe-Verbindung auf, mit deren Hilfe eine drehfeste Verbindung zwischen Nabeneinheit 19 und Rotorträger 13 gewährleistet ist.

Wie ebenfalls in Figur 4 zu erkennen, ist der Rotorträger 13 über das Lager 15 und eine Hülse gegen den Absatz 21 mithilfe einer Wellenmutter 24 gespannt.

Auch zeigt Figur 4, dass das äußere Gehäusewandteil 3 zur Anordnung der Statoreinrichtung 4 ausgebildet ist, wobei die Statoreinrichtung 4 einen Stator 26 und einen Statorträger 27 hat, an welchen radial innenseitig der Stator 26 befestigt ist und welcher radial außenseitig an dem wenigstens einen Gehäusewandteil 3 angeordnet ist.

Zwischen dem Statorträger 27 und dem Gehäusewandteil 3 ist ein Kühlkanal 28 ausgebildet, um Betriebswärme des Stators 26 abzuführen.

Dabei ist der Statorträger 27 ähnlich einem Hohlzylinder ausgebildet, wobei der Statorträger 27 einen Absatz 29 aufweist, mit welchem dieser gegen einen Absatz 30 des äußeren Gehäusewandteils 3 anliegt.

Ferner weist der Statorträger 27 radial außenseitig mehrere Nuten 31 zur Anbringung von Dichtelementen 32 auf, sodass ein Kühlkanal 28 in axialer Richtung X abdichtbar ist. Genannte Dichtelemente 32 des Statorträgers 27 sind in dessen Nuten 31 angeordnet.

Der Statorträger 27 weist zudem diverse Durchgänge 33 in axialer Richtung X auf, die in radialer Richtung Y gesehen außen angeordnet ist, um den Statorträger 27 mit dem äußeren Gehäusewandteil 3 zu verschrauben.

Der Absatz des Statorträgers 27 liegt mit den Durchgängen 33 an dem äußeren Gehäusewandteil 3 an.

Das äußere Gehäusewandteil 3 hat dabei mehrere Innengewinde 34, in welche jeweils eine Schraube S geschraubt ist, um den Statorträger 27 am Gehäuse 2 zu befestigen.

Ferner ist in Figur 4 zu erkennen, dass der Statorträger 27 an einem axialen Ende bzw. an einem Ende, betrachtet in axialer Richtung X, eine Fase 35 aufweist, an welcher eine Dichtung 36 zwischen dem Statorträger 27 und der Dichteinrichtung 6 bzw. deren Dichtelement 8 angeordnet ist. Dadurch kann die Abdichtung verbessert werden.

Zusammenfassend kann bis hierhin festgehalten werden, dass mithilfe der Ausgestaltung einer elektrischen Maschine 1, wie sie oben beschrieben ist, zwei Raumabschnitte A, B so gegeneinander mit der Dichteinrichtung 6 gedichtet werden können, dass Schmutz und Wasser von dem Raumabschnitt A zum Raumabschnitt B noch umgekehrt gelangen kann.

Im Grunde genommen zeigt Figur 4 nicht nur eine elektrische Maschine 1, sondern vielmehr eine hybride Antriebseinheit für ein Fahrzeug.

Diese hybride Antriebseinheit umfasst die elektrische Maschine 1, wie vorstehend beschrieben, und eine Verbrennungskraftmaschine 100 (lediglich mit Bezugszeichen angedeutet) mit einer Kurbelwelle 101 und einem flexiblen Scheibenteil 102.

Das flexible Scheibenteil 102 ist gemäß Figur 4 drehfest an der Kurbelwelle 101 und drehfest an dem Verbindungsteil 16 der Rotoreinrichtung 5 der elektrischen Maschine 1 angeordnet, sodass die Drehenergie der Verbrennungskraftmaschine 100 über die Kurbelwelle 101, das flexible Scheibenteil 102 und das Verbindungsteil 16 hin zum Nabenteil 19 und über den Rotorträger 13 hin zum Rotor 12 übertragbar ist, um mechanische in elektrische Energie zu wandeln.

Das flexible Scheibenteil 102 ist mittels Schrauben S an der Kurbelwelle 101 befestigt, wobei das flexible Scheibenteil 102 an seiner Außenseite, in radialer Richtung Y nach außen betrachtet, bzw. an seiner radialen Außenseite mehrere Durchgänge 103 aufweist, durch welche eine Schraube S hindurchgeführt ist. Somit ist das flexible Scheibenteil 102 mit dem Verbindungsteil 16 der Rotoreinrichtung 5 verbunden.

Auch zeigt Figur 4, dass die Verbrennungskraftmaschine 100 ein Gehäuse 104 und eine Radialwellendichtung 105 hat, die das Innere des Gehäuses 104 gegen das Äußere abdichtet.

Durch die Anordnung der beiden Gehäuse 2, 104 an einer Trennebene T wird der erste Raumabschnitt A einerseits von dem Gehäuse der elektrischen Maschine 1 und andererseits von dem Gehäuse 104 der Verbrennungskraftmaschine 100 begrenzt.

Eine Dichtung der beiden Gehäuse aneinander an der Trennebene T kann dadurch entweder unterlassen werden oder mit geringem Aufwand realisiert werden, da eine vollständige Dichtung des zweiten Raumabschnitts B, in welchem der Stator angeordnet ist, durch die Dichteinrichtung 6 bereits erfolgt ist.

Nachstehend wird noch kurz ein Verfahren zum Verbinden einer Verbrennungskraftmaschine 100 mit einer elektrischen Maschine 1 beschrieben.

So werden zunächst die Kurbelwelle 101 der Verbrennungskraftmaschine 100 und der elektrischen Maschine 1 an einer gemeinsamen Drehachse axial ausgerichtet, um anschließend die Gehäuse 2, 104 der elektrischen Maschine 1 und der Verbrennungskraftmaschine 100 miteinander zu verbinden. Dabei treffen sich beide Gehäuse 2, 104 an der Trennebene T.

Danach werden das Verbindungsteil 16 der Rotoreinrichtung 5 der elektrischen Maschine 1 mittels Schrauben an dem flexiblen Scheibenteil 102 der Verbrennungskraftmaschine 100 verbunden.

Hierzu wird vor dem Verbinden des Verbindungsteils 16 mit dem flexiblen Scheibenteil 102 ein Ausrichten von einem Durchgang 103 des flexiblen Scheibenteils 102 mit einem Innengewinde 17 des Verbindungsteils 16 durchgeführt. Auf diese Weise kann mittels einer Schraube S, die durch eine Öffnung in axialer Richtung bzw. durch eine axiale Öffnung (nicht dargestellt) des Gehäuses 104 der Verbrennungskraftmaschine 100 hindurchführbar ist, das Verbindungsteil 16 und das flexible Scheibenteil 102 verschraubt werden. Ein ähnlicher Zusammenbau findet sich bei heutigen Verbindungen von Wandler-Automaten.

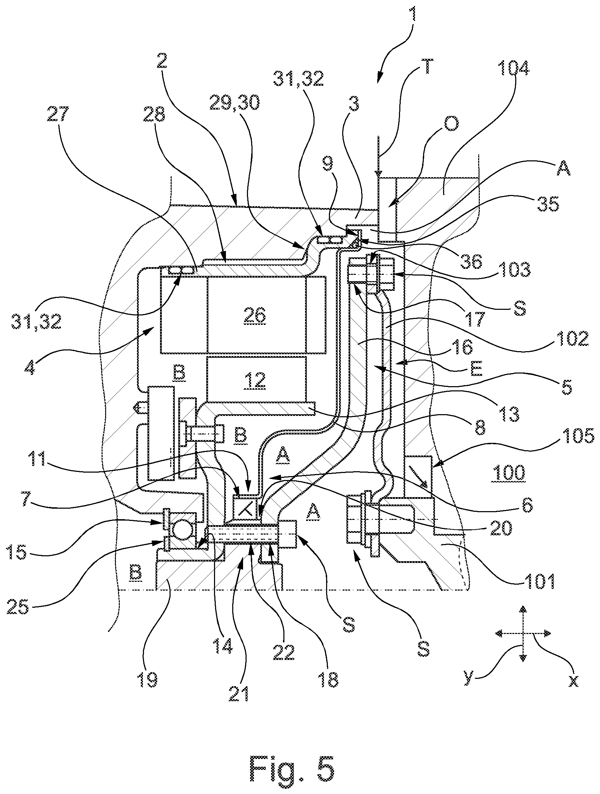

Figur 5 zeigt eine Schnittansicht auf eine elektrische Maschine 1 zur Erzeugung elektrischer Energie für ein hybrides Fahrzeug nach einem zweiten Ausführungsbeispiel.

Identisch zu Figur 4 und dem ersten Ausführungsbeispiel hat die elektrische Maschine 1 gemäß Figur 5 ein Gehäuse 2 mit einer Öffnung E in axialer Richtung X bzw. mit einer axialen Öffnung E zum Einbau einer Stator- 4 und einer Rotoreinrichtung 5 und mit einem äußeren Gehäusewandteil 3, das die elektrische Maschine 1 zur Umgebung abgrenzt.

Ferner weist die elektrische Maschine 1 eine Statoreinrichtung 4, die im Innerem des Gehäuses 2 angeordnet ist, auf.

Zudem hat die elektrische Maschine 1 eine Rotoreinrichtung 5 zur Verbindung mit einer Verbrennungskraftmaschine 100 (lediglich mit Bezugszeichen angedeutet), sodass Drehenergie der Verbrennungskraftmaschine 100 in elektrische Energie durch relative Drehung der Rotoreinrichtung 5 zur Statoreinrichtung 4 umwandelbar ist.

Gemäß Figur 5 hat die elektrische Maschine 1 eine Dichteinrichtung 6, die die axiale Öffnung E des Gehäuses 2 verschließt und das Innere des Gehäuses 2 in axialer Richtung X in zwei Raumabschnitte A, B unterteilt, sodass im ersten Raumabschnitt A eine Kurbelwelle einer Verbrennungskraftmaschine 100 an die Rotoreinrichtung 5 anschließbar ist und im zweiten Raumabschnitt B die Statoreinrichtung 4 angeordnet ist.

Das Verschließen der axialen Öffnung E des Gehäuses 2 erlaubt zum einen ein Eindringen von Wasser in den ersten Raumabschnitt A zwischen der Verbrennungskraftmaschine 100 und der elektrischen Maschine 1 bzw. deren Gehäuse 2, 104, ohne dass die Statoreinrichtung 4 bzw. deren Stator 26 beschädigt werden kann. Denn die Dichteinrichtung 6 schützt den Stator 26 bzw. die Statoreinrichtung 4 vor Wasser und Schmutz. Zum anderen ist aufgrund der Dichteinrichtung 6 ein Dichten der Statoreinrichtung 4 der elektrischen Maschine 1 mit einfachem Aufwand möglich. Ferner kann mithilfe der Dichtvorrichtung 6 die elektrische Maschine 1 vor dem Zusammenbau mit einer Verbrennungskraftmaschine 100 im Werk geprüft werden. Demzufolge kann also eine elektrische Maschine 1 mit Gehäuse 2 geschaffen werden, die vor der Montage mit einer Verbrennungskraftmaschine getestet werden kann und die gegen den Eintritt von Wasser und/oder Schmutz geschützt ist, obwohl die elektrische Maschine 1 noch nicht mit einer Verbrennungskraftmaschine 100 bzw. deren Gehäuse 104 zusammengebaut ist.

Betreffend die weiteren Ausführungen wird zur Vermeidung unnötiger Wiederholungen auf das erste Ausführungsbeispiel nach Figur 4 verwiesen, die hier analog anwendbar sind.

Daher wird nachstehend lediglich auf die Unterschiede zwischen dem ersten und zweiten Ausführungsbeispiel eingegangen.

Zunächst ist bei Vergleich der Figuren 4 und 5 festzuhalten, dass im Wesentlichen zwei konstruktive Unterschiede zu erkennen sind. Einmal betreffend die Nabeneinheit 19 und einmal betreffend die Befestigung der Dichteinrichtung 6 an dem äußeren Gehäusewandteil 3.

In Figur 4 weist das geformte Dichtelement 8 am Ende in radialer Richtung Y nach außen betrachtet bzw. an seinem radial außenliegenden Ende einen Durchgang 10 für eine Schraube S oder einen Niet auf, um eine reib- oder kraftschlüssige Verbindung zwischen Dichtelement 8 und Gehäuse 2 herzustellen.

Dieser Durchgang 10 fehlt dem zweiten Ausführungsbeispiel nach Figur 5. Im zweiten Ausführungsbeispiel ist die Dichteinrichtung 6 also nicht mit Schrauben am Gehäuse 2 gesichert, sondern am Gehäuse 2eingeklemmt bzw. eingepresst bzw. eingespreizt. Auf diese Weise ist die Dichteinrichtung 6 bzw. das geformte Dichtelement 8 rotationsstarr am Gehäuse 2 angeordnet. Ferner kann auf Befestigungsmittel wie Schrauben oder Nieten verzichtet werden, wodurch Gewicht einsparbar ist und die Montage vereinfacht wird.

Hingegen weist in beiden Ausführungsbeispielen der Statorträger 27 an einem axialen Ende bzw. an einem Ende, betrachtet in axialer Richtung, eine Fase 35 auf, an welcher eine Dichtung 36 zwischen dem Statorträger 27 und der Dichteinrichtung 6 angeordnet ist.

Ein weiterer konstruktiver Unterschied zwischen dem ersten und zweiten Ausführungsbeispiel nach Figur 4 und 5 ist im Bereich der Nabeneinheit 19 zu erkennen.

Sowohl in Figur 4 als auch in Figur 5 hat die Rotoreinrichtung 5 eine Nabeneinheit 19, an welcher der Rotorträger 13 der Rotoreinrichtung 5 drehfest befestigt ist, der für die drehfeste Anordnung eines Rotors 12 der Rotoreinrichtung 5 ausgebildet ist.

Ferner ist an der Nabeneinheit 19 ein Verbindungsteil 16 der Rotoreinrichtung 5 drehfest befestigt, das für die Verbindung mit einer Kurbelwelle 101 ausgebildet ist.

Die Nabeneinheit 19 hat eine Dichtfläche 20 für eine Radialwellendichtung 7, die zwischen dem Rotorträger 13 der Rotoreinrichtung 5 und dem Verbindungsteil 16 der Rotoreinrichtung 5 angeordnet ist.

Die Dichtfläche 20 wird dabei von einem Absatz 21 der Nabeneinheit 19 gebildet, gegen den auf der einen Seite der Rotorträger 13 und auf der anderen Seite das Verbindungsteil 16 anliegt, sodass eine Kurbelwelle 101 einer Verbrennungskraftmaschine 100 über das Verbindungsteil 16 und über die Nabeneinheit 19 mit dem Rotorträger 13 verbindbar ist.

Während nun nach Figur 4 der Absatz 21 mehrere Durchgangsbohrungen 22 hat, in welchen jeweils ein Niet N angeordnet ist, sind in Figur 5 in den Durchgangsbohrungen 22 Schrauben S angeordnet.

Die Schrauben S verbinden die Nabeneinheit 19, den Rotorträger 13 und das Verbindungsteil 16 der Rotoreinrichtung 5 drehfest miteinander.

Eine Verzahnung 23 der Nabeneinheit 19, wie in Figur 4 gezeigt, ist betreffend das zweite Ausführungsbeispiel nach Figur 5 nicht vorhanden.

Des Weiteren ist in Figur 5 das Lager 15 der Rotoreinrichtung 5 mithilfe eines Sicherungsrings 25 am Rotorträger 13 gesichert, während in Figur 4 der Rotorträger 13 gegen den Absatz 21 mithilfe einer Wellenmutter 24 gespannt ist.

Nachstehend werden die Figuren nochmals mit anderen Worten beschrieben.

So wird die vorliegende Erfindung nachstehend anhand der Beschreibung von Ausführungsformen unter Bezugnahme auf die beiliegende Zeichnung nochmals näher und erneut erläutert.

In der Zeichnung zeigt:
Fig. 1 eine schematische Ansicht eines Getriebes mit zwei elektrischen Maschinen im Stand der Technik;
Fig. 2 eine schematische Ansicht eines vergrößerten Ausschnitts von Fig. 1;
Fig. 3 eine zu Fig. 2 analoge schematische Ansicht eines weiteren Getriebes mit zwei elektrischen Maschinen im Stand der Technik;
Fig. 4 eine schematische Ansicht eines Ausschnitts eines Getriebes mit zwei elektrischen Maschinen gemäß einer ersten Ausführungsform; und
Fig. 5 eine schematische Ansicht eines Ausschnitts eines Getriebes mit zwei elektrischen Maschinen gemäß einer zweiten Ausführungsform.

Nachstehend erfolgt die Beschreibung einer ersten Ausführungsform.

Fig. 4 zeigt eine schematische Ansicht eines Ausschnitts eines Getriebes mit zwei elektrischen Maschinen gemäß der ersten Ausführungsform.

Wie es in Fig. 4 gezeigt ist, ist ein axial flexibles Blech bzw. eine Flexplate bzw. ein flexibles Scheibenteil 102 über Schrauben S mit einer Kurbelwelle 101 verbunden und ist Teil des Verbrennungsmotors bzw. einer Verbrennungskraftmaschine 100 (lediglich mit Bezugszeichen angedeutet).

Ein Stator 26 einer ersten elektrischen Maschine 1 ist mittels eines Statorträgers 27 über zum Beispiel Schrauben S mit einem Getriebegehäuse 2 bzw. mit einem Gehäuse der elektrischen Maschine 1 verbunden.

Ein Kühlmittel- bzw. Kühlwasserkanal bzw. Kühlkanal 28 ist durch das Getriebegehäuse 2 bzw. durch das Gehäuse 2 der elektrischen Maschine 1 und den Statorträger 27 begrenzt.

Ein Rotor 12 bzw. genauer dargestellt ein Rotorträger 13 der ersten elektrischen Maschine 1 ist über eine spielfreie Verzahnung 23 mit einer möglichst kleinen Nabe bzw. Nabeneinheit 19 drehfest verbunden.

Der Rotor 12 der ersten elektrischen Maschine 1 ist über ein Wälzlager bzw. ein Lager 15 in dem Getriebegehäuse 2 bzw. in dem Gehäuse der elektrischen Maschine 1 gelagert.

Das Wälzlager / Lager 15 ist zum Beispiel über eine Mutter bzw. Wellenmutter 24 axial auf der Nabe / Nabeneinheit 19 gesichert.

Die Nabe / Nabeneinheit 19 ist über eine Niete N mit einem Mitnahmeblech/Schwungrad bzw. Verbindungsteil 16 verbunden.

Zwischen dem Mitnahmeblech/Schwungrad bzw. Verbindungsteil 16 und dem Rotor 12 befindet sich ein Dichtblech bzw. Dichtelement 8, das die Trennung zwischen einem nicht abgedichteten bzw. nicht abdichtbaren Raum A bzw. einem ersten Raumabschnitt A und einem abgedichteten Raum B bzw. zweiten Raumabschnitt B ermöglicht.

Innen trägt das Dichtblech bzw. Dichtelement 8 einen Radialwellendichtring bzw. eine Radialwellendichtung 7 zur Abdichtung gegen die Nabe / Nabeneinheit 19, außen ist hier beispielhaft ein O-Ring bzw. eine Dichtung 36 dargestellt, der die Abdichtung zu dem Getriebegehäuse bzw. zu dem äußeren Gehäusewandteil 3 des Gehäuses 2 der elektrischen Maschine 1 ermöglicht. Andere Abdichtungsarten sind möglich. Ebenso ist die dargestellte Fixierung des Dichtblechs bzw. Dichtelements 8 über Schrauben S nur beispielhaft. Andere Lösungen wie zum Beispiel Einpressen des Dichtblechs bzw. des Dichtelements 8 in dem Getriebegehäuse bzw. äußeren Gehäusewandteil 3 des Gehäuses 2 der elektrischen Maschine 1 sind möglich (vgl. Figur 5).

Eine Öffnung O im Gehäuse lässt ein Eindringen von Wasser und/oder anderen Verunreinigungen bzw. Fremdstoffen in den nicht abdichtbaren bzw. abgedichteten Raum A bzw. in den ersten Raumabschnitt A zu, ohne dass die erste elektrische Maschine 1 dadurch beschädigt oder kontaminiert wird, da das Dichtblech bzw. das Dichtelement 8 den nicht abdichtbaren bzw. nicht abgedichteten Bereich A bzw. den ersten Raumabschnitt A von dem abgedichteten Bereich B bzw. von dem zweiten Raumabschnitt B abtrennt.

Es ist anzumerken, dass auch in einem Fall, in dem keine explizite Öffnung O vorgesehen ist, keine Abdichtung zwischen dem Getriebegehäuse bzw. dem Gehäuse 2 der elektrischen Maschine 1 und dem Motorgehäuse 104 bzw. dem Gehäuse 104 des Verbrennungsmotors / der Verbrennungskraftmaschine 100 erforderlich ist, da ein Beschädigen bzw. Kontaminieren der ersten elektrischen Maschine 1 durch das Dichtblech / Dichtelement 8 auch dann verhindert wird, wenn Wasser und/oder andere Verunreinigungen bzw. Fremdstoffe durch einen Spalt zwischen dem Getriebegehäuse 2 / Gehäuse 2 und dem Motorgehäuse / Gehäuse 104 des Verbrennungsmotors 100 bzw. Verbrennungskraftmaschine 100 in den nicht abdichtbaren bzw. nicht abgedichteten Raum A / ersten Raumabschnitt A eindringen.

Es wird also explizit auf eine Abdichtung des durch das Getriebegehäuse 2 bzw. Gehäuse 2, das Motorgehäuse 104 bzw. Gehäuse 104 und das Dichtblech 8 bzw. Dichtelement 8 gebildeten Raums A / ersten Raumabschnitts A zur äußeren Umgebung hin verzichtet.

Nachstehend erfolgt die Beschreibung einer zweiten Ausführungsform.

Es ist anzumerken, dass die zweite Ausführungsform ausgenommen der nachstehend beschriebenen Unterschiede bzw. Änderungen identisch zu der ersten Ausführungsform ist.

Fig. 5 zeigt eine schematische Ansicht eines Ausschnitts eines Getriebes mit zwei elektrischen Maschinen gemäß der zweiten Ausführungsform.

Ein Mitnahmeblech/Schwungrad bzw. Verbindungsteil 16, ein Rotorträger 13 und eine Nabe bzw. Nabeneinheit 19 sind über Schrauben S miteinander verbunden.

Kombinationen wie Nieten der Nabe / Nabeneinheit 19 an den Rotorträger 13 und Verschrauben des Mitnahmeblech/Schwungrades bzw. Verbindungsteils 16 lediglich an die Nabe bzw. Nabeneinheit 19 sind ebenso möglich.

Bei beiden zuvor genannten Ausführungsformen erfolgt das Verbinden der ersten elektrischen Maschine 1 mit der Kurbelwelle 101 nach dem Befestigen des Getriebes bzw. der elektrischen Maschine 1 an dem Verbrennungsmotor 100 bzw. der Verbrennungskraftmaschine 100 (lediglich mit Bezugszeichen angedeutet) über Schrauben S.

Durch die zuvor angegebenen Ausführungsformen werden die folgenden Vorteile erzielt:
- direkte spielfreie drehfeste Verbindung eines Rotors 12 einer ersten elektrischen Maschine 1 mit einer Kurbelwelle 101
- kein Zwischenschalten eines Torsionsdämpfers
- keine speziellen Isolationsaufwände für einen Stator 26 der ersten elektrischen Maschine 1
- Zulassen eines Eindringens von Wasser und/oder anderen Fremdstoffen/Verunreinigungen in einen Raum bzw. in einen ersten Raumabschnitt A zwischen einem Verbrennungsmotor 100 bzw. einer Verbrennungskraftmaschine 100 und einem Getriebe bzw. einer elektrischen Maschine 1, ohne die erste elektrische Maschine 1 zu kontaminieren oder zu beschädigen
- finales Prüfen und ggf. Einrichten des Getriebes bzw. der elektrischen Maschine 1 inklusive der Funktion der ersten elektrischen Maschine 1 bei bzw. nach Zusammenbau des Getriebes / der elektrischen Maschine 1

Obgleich die vorliegende Erfindung vorhergehend anhand von Ausführungsformen beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verwiesen.

### Bezugszeichenliste

| | | | |
|---|---|---|---|
| 1 | Elektrische Maschine | 30 | Absatz des äußeren Gehäusewandteils |
| 2 | Gehäuse | | |
| 3 | äußeres Gehäusewandteil | 31 | Nuten |
| 4 | Statoreinrichtung | 32 | Dichtelemente |
| 5 | Rotoreinrichtung | 33 | Durchgang |
| 6 | Dichteinrichtung | 34 | Innengewinde des äußeren Gehäusewandteils |
| 7 | Radialwellendichtung | | |
| 8 | geformtes Dichtelement | 35 | Fase |
| 9 | Aufnahme | 36 | Dichtung |
| 10 | Durchgang | 37 | Radialwellendichtring |
| 11 | Aufnahme | | |
| 12 | Rotor | 100 | Verbrennungskraftmaschine |
| 13 | Rotorträger | 101 | Kurbelwelle |
| 14 | Lageraufnahme | 102 | flexibles Scheibenteil |
| 15 | Lager | 103 | Durchgang |
| 16 | Verbindungsteil | 104 | Gehäuse |
| 17 | Innengewinde | 105 | Radialwellendichtung |
| 18 | Durchgang | | |
| 19 | Nabeneinheit | A | erster Raumabschnitt (E-Maschinenraum) |
| 20 | Dichtfläche | | |
| 21 | Absatz der Nabeneinheit | B | zweiter Raumabschnitt (Ölraum) |
| 22 | Durchgangsbohrungen | X | axiale Richtung |
| 23 | Verzahnung / Gegenverzahnung | Y | radiale Richtung |
| 24 | Wellenmutter | E | Öffnung |
| 25 | Sicherungsring | N | Niet |
| 26 | Stator | S | Schraube |
| 27 | Statorträger | T | Trennebene |
| 28 | Kühlkanal | O | Öffnung |
| 29 | Absatz des Statorträgers | | |

## Patentansprüche

1. Elektrische Maschine (1) zur Erzeugung elektrischer Energie für ein hybrides Fahrzeug aufweisend:
- ein Gehäuse (2) mit einer axialen Öffnung (E) zum Einbau einer Stator- (4) und einer Rotoreinrichtung (5) und mit wenigstens einem äußeren Gehäusewandteil (3), das die elektrische Maschine (1) zur Umgebung abgrenzt,
- eine Statoreinrichtung (4), die im Innerem des Gehäuses (2) angeordnet ist,
- eine Rotoreinrichtung (5) zur Verbindung mit einer Verbrennungskraftmaschine (100), sodass Drehenergie der Verbrennungskraftmaschine (100) in elektrische Energie durch relative Drehung der Rotoreinrichtung (5) zur Statoreinrichtung (4) umwandelbar ist,
- wobei die elektrische Maschine (1) eine Dichteinrichtung (6) aufweist, wobei die Dichteinrichtung (6) ein Dichtelement (8) in Form eines Dichtblechs aufweist, die axiale Öffnung (E) des Gehäuses (2) verschließt und das Innere des Gehäuses (2) in axialer Richtung (X) in zwei Raumabschnitte (A, B) unterteilt, sodass in einem ersten Raumabschnitt (A) eine Kurbelwelle einer Verbrennungskraftmaschine (100) an die Rotoreinrichtung (5) anschließbar ist und in einem zweiten Raumabschnitt (B) die Statoreinrichtung (4) angeordnet ist,
- wobei das wenigstens eine äußere Gehäusewandteil (3) zur Anordnung der Statoreinrichtung (4) ausgebildet ist,
- wobei die Statoreinrichtung (4) einen Stator (26) und einen Statorträger (27) umfasst, an welchen radial innenseitig der Stator (26) befestigt ist und welcher radial außenseitig an dem wenigstens einen Gehäusewandteil (3) angeordnet ist,
- **dadurch gekennzeichnet, dass** der Statorträger (27) an einem axialen Ende eine Fase (35) aufweist, an welcher eine Dichtung (36) zwischen dem Statorträger (27) und dem Dichtelement (8) angeordnet ist.

2. Elektrische Maschine nach Anspruch 1,
- wobei die Dichteinrichtung (6) innerhalb des Gehäuses (2) angeordnet ist und sich von dem wenigstens einen äußeren Gehäusewandteil (3) hin zur Rotoreinrichtung (5) erstreckt, und
- wobei die Dichteinrichtung (6) dichtend an dem wenigstens einen äußeren Gehäusewandteil (3) und an der Rotoreinrichtung (5), insbesondere an einer Nabeneinheit (19) der Rotoreinrichtung (5), anliegt.

3. Elektrische Maschine nach Anspruch 1 oder 2,
- wobei die Dichteinrichtung (6) eine Radialwellendichtung (7) und ein geformtes Dichtelement (8) umfasst, dessen Verlauf trichterförmig ausgebildet ist,
und/oder
- wobei das Dichtelement (8) an seinem radial innenliegenden Ende eine Aufnahme (11) für eine Radialwellendichtung (7) der Dichteinrichtung (6) bildet und so ausgebildet ist, dass die Radialwellendichtung (7) mit einer Vorspannkraft gegen eine Dichtfläche (20) einer Nabeneinheit (19) der Rotoreinrichtung (5) spannbar ist.

4. Elektrische Maschine nach einem der vorangehenden Ansprüche,
- wobei die Rotoreinrichtung (5) einen Rotor (12) und einen Rotorträger (13) aufweist, die miteinander drehfest verbunden sind,
- wobei die Rotoreinrichtung (5) ein Verbindungsteil (16) aufweist, das für die Verbindung mit einer Kurbelwelle (101) einer Verbrennungskraftmaschine (100) ausgebildet ist, und
- wobei das Verbindungsteil (16) an seiner radialen Innenseite wenigstens einen Durchgang (18) zur reib- und/oder formschlüssigen Verbindung mit einer Nabeneinheit (19) der Rotoreinrichtung (5) aufweist.

5. Elektrische Maschine nach einem der vorangehenden Ansprüche,
- wobei die Rotoreinrichtung (5) eine Nabeneinheit (19) aufweist, an welcher ein Rotorträger (13) der Rotoreinrichtung (5) drehfest befestigt ist, der für die drehfeste Anordnung eines Rotors (12) der Rotoreinrichtung (5) ausgebildet ist, und/oder an welcher ein Verbindungsteil (16) der Rotoreinrichtung (5) drehfest befestigt ist, das für die Verbindung mit einer Kurbelwelle (101) ausgebildet ist.

6. Elektrische Maschine nach Anspruch 5,
- wobei die Nabeneinheit (19) eine Dichtfläche (20) für eine Radialwellendichtung (7) der Dichteinrichtung (6) aufweist, und wobei die Dichtfläche (20) zwischen einem Rotorträger (13) der Rotoreinrichtung (5) und einem Verbindungsteil (16) der Rotoreinrichtung (5) angeordnet ist,
und/oder
- wobei die Nabeneinheit (19) einen Absatz (21) aufweist, gegen den auf der einen Seite der Rotorträger (13) und auf der anderen Seite das Verbindungsteil (16) anliegt, sodass eine Kurbelwelle (101) einer Verbrennungskraftmaschine (100) über das Verbindungsteil (16) und über die Nabeneinheit (19) mit dem Rotorträger (13) verbindbar ist.

7. Elektrische Maschine nach Anspruch 5 oder 6,
- wobei die Nabeneinheit (19) eine Verzahnung (23) aufweist, in welche der Rotorträger (13) mit entsprechender Gegenverzahnung (23) eingreift, und wobei Verzahnung (23) und Gegenverzahnung (23) spielfrei ausgebildet sind,
und/oder
- wobei die Nabeneinheit (19) zusammen mit dem Rotorträger (13) eine Welle-Nabe-Verbindung aufweist, mit deren Hilfe eine drehfeste Verbindung zwischen Nabeneinheit (19) und Rotorträger (13) gewährleistet ist,

8. Hybride Antriebseinheit für ein Fahrzeug aufweisend:
- eine elektrische Maschine (1) nach einem der vorangehenden Ansprüche, und
- eine Verbrennungskraftmaschine (100) mit einer Kurbelwelle (101) und einem flexiblen Scheibenteil (102),
- wobei das flexible Scheibenteil (102) drehfest an der Kurbelwelle (101) und drehfest an dem Verbindungsteil (16) der Rotoreinrichtung (5) der elektrischen Maschine (1) angeordnet ist, sodass die Drehenergie der Verbrennungskraftmaschine (100) über die Kurbelwelle (101), das flexible Scheibenteil (102) und das Verbindungsteil (16) hin zum Nabenteil (19) und über den Rotorträger (13) hin zum Rotor (12) übertragbar ist, um mechanische in elektrische Energie zu wandeln.

## Claims

1. An electric machine (1) for generating electric energy for a hybrid vehicle, having:
- a housing (2) having an axial opening (E) for installing a stator (4) and a rotor device (5) and having at least one outer housing wall part (3) that delimits the electric machine (1) from the surroundings,
- a stator device (4) that is arranged in the interior of the housing (2),
- a rotor device (5) for connecting to an internal combustion engine (100), such that rotational energy of the internal combustion engine (100) can be converted into electric energy by means of a rotation of the rotor device (5) relative to the stator device (4),
- wherein the electric machine (1) has a seal device (6), wherein the seal device (6) has a seal element (8) in the form of a sealing plate, which closes the axial opening (E) of the housing (2) and divides the interior of the housing (2) into two spatial sections (A, B) in the axial direction (X), such that a crankshaft of an internal combustion engine (100) can be connected to the rotor device (5) in a first spatial section (A) and the stator device (4) is arranged in a second spatial section (B),
- wherein the at least one outer housing wall part (3) is designed for the arrangement of the stator device (4),
- wherein the stator device (4) comprises a stator (26) and a stator carrier (27), to which the stator (26) is attached radially on the inside and which is arranged radially on the outside of the at least one housing wall part (3),
- **characterized in that** the stator carrier (27) has a chamfer (35) at an axial end, on which a seal (36) is arranged between the stator carrier (27) and the seal element (8).

2. The electric machine according to claim 1,
- wherein the seal device (6) is arranged inside the housing (2) and extends from the at least one outer housing wall part (3) towards the rotor device (5), and
- wherein the seal device (6) bears sealingly against the at least one outer housing wall part (3) and against the rotor device (5), in particular against a hub unit (19) of the rotor device (5).

3. The electric machine according to claim 1 or 2,
- wherein the seal device (6) comprises a radial shaft seal (7) and a shaped seal element (8), the course of which is shaped like a funnel,
and/or
- wherein the seal element (8) forms a receptacle (11) for a radial shaft seal (7) of the seal device (6) at its radially inner end and is designed such that the radial shaft seal (7) can be clamped with a preload force against a seal surface (20) of a hub unit (19) of the rotor device (5).

4. The electric machine according to any one of the preceding claims,
- wherein the rotor device (5) has a rotor (12) and a rotor carrier (13), which are non-rotatably connected to one another,
- wherein the rotor device (5) has a connecting part (16) designed for connection with a crankshaft (101) of an internal combustion engine (100), and
- wherein the connecting part (16) has at least one passage (18) on its radial inner side for frictional and/or form-fitting connection with a hub unit (19) of the rotor device (5).

5. The electric machine according to any one of the preceding claims,
- wherein the rotor device (5) has a hub unit (19), to which a rotor carrier (13) of the rotor device (5) is non-rotatably fastened, which is designed for the non-rotatable arrangement of a rotor (12) of the rotor device (5), and/or to which a connecting part (16) of the rotor device (5) is non-rotatably fastened, which is designed for connection with a crankshaft (101).

6. The electric machine according to claim 5,
- wherein the hub unit (19) has a seal surface (20) for a radial shaft seal (7) of the seal device (6), and wherein the seal surface (20) is arranged between a rotor carrier (13) of the rotor device (5) and a connecting part (16) of the rotor device (5),
and/or
- wherein the hub unit (19) has a shoulder (21), against which the rotor carrier (13) rests on one side and the connecting part (16) rests on the other side, such that a crankshaft (101) of an internal combustion engine (100) can be connected to the rotor carrier (13) via the connecting part (16) and via the hub unit (19).

7. The electric machine according to claim 5 or 6,
- wherein the hub unit (19) has a toothing (23), into which the rotor carrier (13) engages with a corresponding counter-toothing (23), and wherein the toothing (23) and counter-toothing (23) are designed to be without play,
and/or
- wherein the hub unit (19) together with the rotor carrier (13) has a shaft-hub connection by means of which a non-rotatable connection between hub unit (19) and rotor carrier (13) is ensured,

8. A hybrid drive unit for a vehicle, having:
- an electric machine (1) according to any one of the preceding claims, and
- an internal combustion engine (100) having a crankshaft (101) and a flexible disk part (102),
- wherein the flexible disk part (102) is arranged non-rotatably on the crankshaft (101) and non-rotatably on the connecting part (16) of the rotor device (5) of the electric machine (1), such that the rotational energy of the internal combustion engine (100) can be transmitted via the crankshaft (101), the flexible disk part (102) and the connecting part (16) to the hub part (19) and via the rotor carrier (13) to the rotor (12) in order to convert mechanical energy into electrical energy.

## Revendications

1. Machine électrique (1) destinée à générer de l'énergie électrique pour un véhicule hybride présentant :
- un carter (2) comportant une ouverture axiale (E) pour installer un stator (4) et un ensemble rotor (5) et comportant au moins une partie paroi de carter (3) extérieure qui sépare la machine électrique (1) de l'environnement,
- un ensemble stator (4) qui est agencé dans l'intérieur du carter (2),
- un ensemble rotor (5) destiné à être relié à un moteur à combustion interne (100), de telle sorte que l'énergie de rotation du moteur à combustion interne (100) puisse être convertie en énergie électrique par rotation relative de l'ensemble rotor (5) par rapport à l'ensemble stator (4),
- la machine électrique (1) présentant un ensemble d'étanchéité (6), l'ensemble d'étanchéité (6) présentant un élément d'étanchéité (8) sous la forme d'une plaque d'étanchéité, qui ferme l'ouverture axiale (E) du carter (2) et divisant l'intérieur du carter (2) dans la direction axiale (X) en deux sections spatiales (A, B), de telle sorte que dans une première section spatiale (A), un vilebrequin d'un moteur à combustion interne (100) puisse être relié à l'ensemble rotor (5) et que dans une seconde section spatiale (B), l'ensemble stator (4) soit agencé,
- l'au moins une partie paroi de carter (3) extérieure étant conçue pour l'agencement de l'ensemble stator (4),
- l'ensemble stator (4) comprenant un stator (26) et un support de stator (27), auquel le stator (26) est fixé radialement côté intérieur et qui est agencé radialement côté extérieur sur l'au moins une partie paroi de carter (3),
- **caractérisée en ce que** le support de stator (27) présente un chanfrein (35) à une extrémité axiale, sur lequel chanfrein un joint (36) est agencé entre le support de stator (27) et l'élément d'étanchéité (8).

2. Machine électrique selon la revendication 1,
- dans laquelle l'ensemble d'étanchéité (6) est agencé à l'intérieur du carter (2) et s'étend depuis l'au moins une partie paroi de carter (3) extérieure vers l'ensemble rotor (5), et
- dans laquelle l'ensemble d'étanchéité (6) repose de manière étanche contre l'au moins une partie paroi de carter (3) extérieure et contre l'ensemble rotor (5), en particulier contre une unité de moyeu (19) de l'ensemble rotor (5).

3. Machine électrique selon la revendication 1 ou 2,
- dans laquelle l'ensemble d'étanchéité (6) comprend un joint d'arbre radial (7) et un élément d'étanchéité (8) profilé dont le parcours est en forme d'entonnoir,
et/ou
- dans laquelle l'élément d'étanchéité (8) forme un réceptacle (11) pour un joint d'arbre radial (7) de l'ensemble d'étanchéité (6) à son extrémité intérieure radiale et est conçu de telle sorte que le joint d'arbre radial (7) puisse être serré avec une force de précontrainte contre une surface d'étanchéité (20) d'une unité de moyeu (19) de l'ensemble rotor (5).

4. Machine électrique selon l'une quelconque des revendications précédentes,
- dans laquelle l'ensemble rotor (5) présente un rotor (12) et un support de rotor (13) qui sont reliés l'un à l'autre de manière fixe en rotation,
- dans laquelle l'ensemble rotor (5) présente une partie de liaison (16) qui est conçue pour être reliée à un vilebrequin (101) d'un moteur à combustion interne (100), et
- dans laquelle la partie de liaison (16) présente au moins un passage (18) sur son côté intérieur radial pour une liaison par friction et/ou par ajustement de forme avec une unité de moyeu (19) de l'ensemble rotor (5).

5. Machine électrique selon l'une quelconque des revendications précédentes,
- dans laquelle l'ensemble rotor (5) présente une unité de moyeu (19) à laquelle un support de rotor (13) de l'ensemble rotor (5) est fixé de manière fixe en rotation, unité qui est conçue pour l'agencement fixe en rotation d'un rotor (12) de l'ensemble rotor (5), et/ou à laquelle une partie de liaison (16) de l'ensemble rotor (5) est fixée de manière fixe en rotation, partie de liaison qui est conçue pour la liaison avec un vilebrequin (101).

6. Machine électrique selon la revendication 5,
- dans laquelle l'unité de moyeu (19) présente une surface d'étanchéité (20) pour un joint d'arbre radial (7) de l'ensemble d'étanchéité (6), et dans laquelle la surface d'étanchéité (20) est agencée entre un support de rotor (13) de l'ensemble rotor (5) et une partie de liaison (16) de l'ensemble rotor (5),
et/ou
- dans laquelle l'unité de moyeu (19) présente un épaulement (21) contre lequel le support de rotor (13) repose d'un côté et la partie de liaison (16) repose de l'autre côté, de telle sorte qu'un vilebrequin (101) d'un moteur à combustion interne (100) puisse être relié au support de rotor (13) par l'intermédiaire de la partie de liaison (16) et par l'intermédiaire de l'unité de moyeu (19).

7. Machine électrique selon la revendication 5 ou 6,
- dans laquelle l'unité de moyeu (19) présente une denture (23) dans laquelle le support de rotor (13) vient en prise avec une contre-denture (23) correspondante, et dans laquelle la denture (23) et la contre-denture (23) sont conçues pour être sans jeu,
et/ou
- dans laquelle l'unité de moyeu (19) conjointement avec le support de rotor (13) présentent une liaison arbre-moyeu au moyen de laquelle une liaison fixe en rotation entre l'unité de moyeu (19) et le support de rotor (13) est assurée,

8. Unité d'entraînement hybride pour un véhicule présentant :
- une machine électrique (1) selon l'une quelconque des revendications précédentes, et
- un moteur à combustion interne (100) comportant un vilebrequin (101) et une partie disque flexible (102),
- la partie disque flexible (102) étant agencée de manière fixe en rotation sur le vilebrequin (101) et de manière fixe en rotation sur la partie de liaison (16) de l'ensemble rotor (5) de la machine électrique (1), de telle sorte que l'énergie de rotation du moteur à combustion interne (100) puisse être transmise par l'intermédiaire du vilebrequin (101), de la partie disque flexible (102) et de la partie de liaison (16) à la partie moyeu (19) et par l'intermédiaire du support de rotor (13) au rotor (12) afin de convertir l'énergie mécanique en énergie électrique.
